# EUROPÄISCHE PATENTSCHRIFT

(11) **EP 1 249 010 B1**
(45) Veröffentlichungstag und Bekanntmachung des Hinweises auf die Patenterteilung: **10.09.2003**
(21) Anmeldenummer: 00990531.6
(22) Anmeldetag: 14.12.2000
(51) Int. Cl.: G07F 7/10, G11C 7/24

(54) **MIKROPROZESSORANORDNUNG MIT VERSCHLÜSSELUNG**
MICROPROCESSOR SYSTEM WITH ENCRYPTION
CIRCUIT DE MICROPROCESSEURS AVEC CRYPTAGE

(30) Priorität: 18.01.2000 EP 00100955
(43) Veröffentlichungstag der Anmeldung: 16.10.2002
(73) Patentinhaber: Infineon Technologies AG, 81669 München (DE)
(72) Erfinder: GAMMEL, Berndt, 85570 Markt Schwaben (DE); KNIFFLER, Oliver, 81737 München (DE); SEDLAK, Holger, 85658 Egmating (DE)
(74) Vertreter: Epping Hermann & Fischer
(86) Internationale Anmeldenummer: DE0004448
(87) Internationale Veröffentlichungsnummer: WO01054083

(56) Entgegenhaltungen:
- EP-A- 0 720 098
- EP-A- 0 965 994
- WO-A-99/46774
- GB-A- 2 203 271

## Beschreibung

Die Erfindung betrifft eine Mikroprozessoranordnung, bei der eine zentrale Verarbeitungseinheit, eine weitere Einheit sowie eine Speichereinheit über einen Bus miteinander verbunden sind und eine Verschlüsselung durchgeführt wird.

Solche Mikroprozessoranordnungen werden in sicherheitskritischen Anwendungen eingesetzt, beispielsweise in einer Chipkarte. Die Anordnung ist auf einem einzigen Halbleiterchip integriert, sogenannter Mikrocontroller. Über den Bus wird sämtlicher Datenverkehr abgewickelt. Der Bus übermittelt beispielsweise Daten, Adressen, Programmbefehle, Steuerbefehle etc. Die abzuarbeitenden Programme sind in einem nichtflüchtigen Speicher (ROM) gespeichert, Daten können ebenfalls im nichtflüchtigen Speicher oder temporär in einem flüchtigen Speicher (RAM) gespeichert werden. Wegen der langen Zugriffszeit auf diese Speicher werden die zu verarbeitenden Daten in schnelleren Cache-Speichern zwischengepuffert.

Sämtliche Speicher sowie die Busse auf dem Mikroprozessor oder Mikrocontroller sind leicht zu identifizierende regelmäßige Strukturen auf dem Chip. Sie stellen daher bevorzugte Angriffspunkte dar, wenn versucht wird, chipinterne Schaltungen oder Betriebsabläufe abzugreifen, um sicherheitsrelevante Daten und Funktionen auszuspähen. Etwaige Angriffe können durch Probing erfolgen, bei dem durch Aufsetzen von Nadeln auf interessierende Strukturen die Signalverläufe abgegriffen werden.

Im Speicher abgelegte Daten sind daher bei herkömmlichen Mikroprozessoren oder -controllern mit einer aufwendigen Verschlüsselung chiffriert. Das Auslesen erfordert entsprechenden Rechenaufwand. Die anschließende Übertragung der Daten und Einspeisung in die verschiedenen Funktionseinheiten des Mikroprozessors erfolgt in der Regel unverschlüsselt. Bei einem Nadelangriff auf den Bus könnten daher jegliche Daten im Klartext abgefragt werden. Eine vergleichsweise aufwendige Ver- und Entschlüsselung auch des Datenverkehrs von und zur zentralen Verarbeitungseinheit (CPU), einer Peripherieeinheit oder einer arithmetisch-logischen Einheit (ALU) oder des Cache-Speichers empfiehlt sich nicht, da die Zugriffsgeschwindigkeit auf diese Einheiten dadurch wesentlich verringert würde.

Die WO 99 46774 A zeigt ein Schema zur Entschlüsselung von verschlüsselten Datenbitströmen für die Konfiguration von programmierbaren Logikeinheiten. Hierzu wird ein Entschlösselungsschlüssel in die Entschlüsselungseinheit der Schaltung geladen, wobei der Schaltkreis sich in einem ersten Zustand befindet. Dann wird ein verschlüsselter Bitdatenstrom der Schaltung zugeführt. Nachdem ein erster Teil dieses Bitdatenstromes in der Schaltung entschlüsselt wurde, wird der Schaltkreis in einen zweiten Zustand versetzt. Daraufhin wird ein zweiter Bitdatenstrom entschlüsselt. Die programmierbare Logikeinheit ist nun unter Benutzung dieser beiden Bitdatenströme konfiguriert.

Die Aufgabe der Erfindung besteht darin, eine Mikroprozessoranordnung anzugeben, die gegenüber einem Ausspähen von internen Abläufen höhere Sicherheit aufweist.

Gelöst wird diese Aufgabe durch eine Mikroprozessoranordnung, die umfaßt: eine zentrale Verarbeitungseinheit; eine weitere Einheit; eine Speichereinheit; einen Bus, über den die zentrale Verarbeitungseinheit, die weitere Einheit und der Speicher miteinander zum Austausch von Daten verbunden sind; je eine den Einheiten zugeordnete erste Verschlüsselungseinheit, die zwischen den Bus und der zugeordneten Einheit geschaltet ist und ein Mittel zur Bereitstellung eines Schlüssels und ein logisches Verknüpfungselement umfaßt, das zwischen den Bus und die zugeordnete Einheit geschaltet ist, wobei der Schlüssel für die Einheiten gleich ist und veränderbar ist; eine der Speichereinheit zugeordnete zweite Verschlüsselungseinheit, die ein Mittel zur Bereitstellung eines weiteren Schlüssels umfaßt sowie ein logisches Verknüpfungselement, das zwischen das Mittel zur Bereitstellung des Schlüssels der zugeordneten ersten Verschlüsselungseinheit und das logische Verknüpfungselement der zugeordneten ersten Verschlüsselungseinheit geschaltet ist.

Bei der Mikroprozessoranordnung gemäß der Erfindung ist bei jeder an den Bus angeschlossenen Funktionseinheit eine Verschlüsselungseinrichtung vorgesehen, die relativ einfach auf-gebaut ist. Sie umfaßt ein Mittel zur Bereitstellung eines Schlüssels, beispielsweise ein Register, sowie ein Verknüpfungselement, beispielsweise ein Exklusiv-ODER-Gatter. Die Verschlüsselungseinrichtung ist in der Lage, sowohl eine Verschlüsselung des von der Funktionseinheit auf den Bus ausgegebenen Datums durchzuführen als auch eine Entschlüsselung eines zu empfangenden Datums. Die Verschlüsselungseinrichtung ist einfach aufgebaut und führt daher bei der Datenübertragung zu keiner nennenswerten Verzögerung.

Zweckmäßigerweise wird der Schlüssel, welcher im Register abgelegt ist, von Zeit zu Zeit verändert. Die Aktualisierung des Schlüssels erfolgt vorzugsweise mit jedem Betriebstakt. Damit ein von einer Funktionseinheit auf den Bus ausgegebener und verschlüsselter Datenwert von einer anderen Funktionseinheit bei wechselndem Schlüssel wieder entschlüsselt werden kann, müssen die Schlüsselregister jeder Funktionseinheit bei zusammengehörenden Lese- und Schreibvorgängen den gleichen Schlüssel beinhalten. Der Schlüssel wird zweckmäßigerweise hierzu von einem Schlüsselgenerator erzeugt, der taktsynchron an alle Schlüsselregister den gleichen Schlüssel weiterleitet. Vorzugsweise wird der Schlüssel zufallsgesteuert erzeugt. Trotz der einfachen, kaum Verzögerungszeit beanspruchenden Ver- und Entschlüsselung wird durch die zufällige Bereitstellung verschiedener Schlüsselworte ausreichend Sicherheit vor einem Abgriff und Ausspähen des Datenverkehrs geboten.

Um in einem an den Bus angeschlossenen Speicher, beispielsweise einem Cache-Speicher, einem Puffer-Speicher oder einem Translation Lookaside Buffer zu verhindern, daß die Information im Klartext dort abgespeichert ist, ist eine zusätzliche Ver- bzw. Entschlüsselung erforderlich. Hierzu ist eine weitere Verschlüsselungseinheit vorgesehen, die wiederum ein Mittel zur Bereitstellung des Schlüssels, beispielsweise ein weiteres Schlüsselregister, sowie ein logisches Verknüpfungselement, beispielsweise ein Exklusiv-ODER-Gatter umfaßt. Wesentlich ist, daß das logische Verknüpfungselement der weiteren Verschlüsselungseinheit zwischen das logische Verknüpfungselement der ersten Verschlüsselungseinheit und deren Schlüsselregister angeordnet ist. Dies hat den Vorteil, daß sämtliche Busabschnitte, insbesondere diejenigen zwischen dem logischen Verknüpfungselement der ersten Verschlüsselungseinheit, welches zwischen Bus und Speicher angeordnet ist, und dem Speicher, nur verschlüsselte Daten führen.

Das Schlüsselregister der zweiten Verschlüsselungseinheit wird von einem weiteren Schlüsselgenerator gespeist. Zweckmäßigerweise wird auch dieser Schlüssel von Zeit zu Zeit verändert. Dabei ist zu gewährleisten, daß im Speicher verschlüsselt zwischengespeicherte Daten mit dem gleichen Schlüssel wieder ausgelesen werden. Der Schlüssel für das genannte Schlüsselregister wird daher nur dann aktualisiert, wenn der Speicher keine gültige Information mehr enthält. Dies ist beispielsweise dann der Fall, wenn der Speicher vollständig entleert ist oder wenn der Speicher neu initialisiert wird. Dies erfolgt beispielsweise dann, wenn die Mikroprozessoranordnung eine Anwendung beendet hat und eine neue Anwendung beginnt. Bei einem solchen Applikationswechsel ist es aus Sicherheitsgründen nicht mehr erforderlich, den Speicherinhalt zu ändern, da durch den Schlüsselwechsel der im Speicher noch enthaltene Dateninhalt ohnehin von einer neuen Anwendung nicht mehr verwertbar ist.

In Ausgestaltung der Erfindung umfassen die Verschlüsselungseinheiten nur Exklusiv-ODER-Gatter und zugehörige Schlüsselregister bei jeder an den Bus angeschlossenen Funktionseinheit. Der schaltungstechnische Aufwand ist relativ gering. Die Schlüsselgeneratoren sind jeweils nur in einfacher Ausführung vorzusehen. Der zusätzliche Rechenaufwand ist gemessen an der gewonnenen Sicherheit vor einem Ausspähen des Datenverkehrs relativ gering.

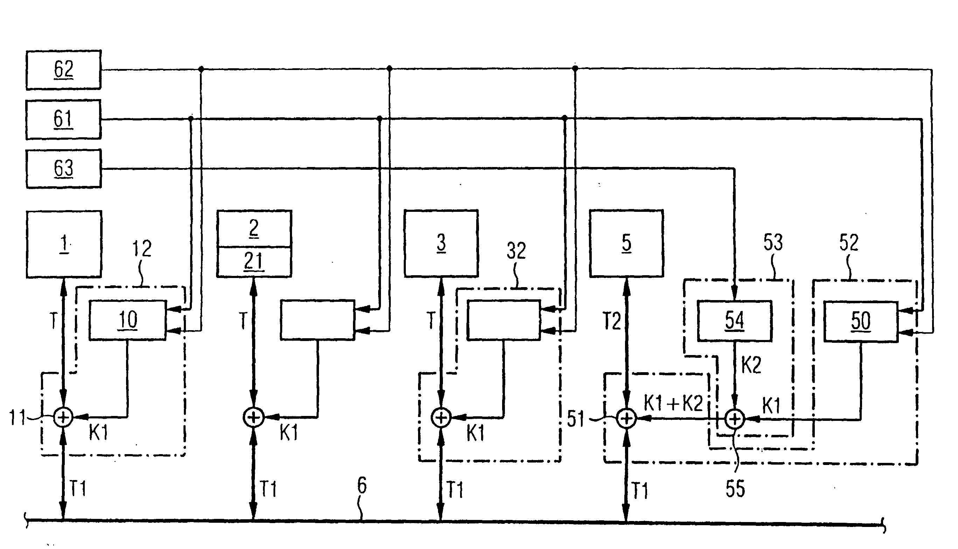

Nachfolgend wird die Erfindung anhand des in der Zeichnung dargestellten Ausführungsbeispiels näher erläutert.

Die in der Zeichnung dargestellte Figur zeigt ein Blockschaltbild eines Mikrocontrollers für Sicherheitsanwendungen gemäß der Erfindung. Der Mikrocontroller umfaßt eine Anzahl von Komponenten: eine zentrale Verarbeitungseinheit (CPU) 1, die die Steuerung des Datenverkehrs abwickelt; einen Speicher 2, der Daten und abzuarbeitende Programme dauerhaft speichert; eine Peripherieeinheit 3, die Datenverkehr zu externen außerhalb des Mikrocontrollers angeordneten Schaltungen ausführt; einen Pufferspeicher 5, der Daten zwischenspeichert. Fett gezeichnete Verbindungen umfassen mehrere Leitungen.

Der nichtflüchtige Speicher 2 umfaßt eine Entschlüsselungseinrichtung 21, die eine sehr gute Verschlüsselung mit relativ langer Schlüssellänge ausführt. Die Entschlüsselung benötigt jedoch relativ lange Rechenzeit und ist schaltungstechnisch entsprechend aufwendig. Aus dem Speicher 2 auszulesende Daten werden daher im Speicher 5 zwischengepuffert, der wesentlich schneller zugriffsbereit ist. Der Speicher 5 ist ein sogenannter Cache-Speicher. Die genannten Funktionseinheiten sind untereinander über einen Bus 6 miteinander verbunden, der eine Vielzahl von Daten- und Steuerungsleitungen umfaßt.

Zwischen dem Bus 6 und jeder der Funktionseinheiten ist eine Verschlüsselungseinheit angeordnet, zum Beispiel die Einheiten 12, 32 und 52. Die Verschlüsselungseinheit verschlüsselt den von der Funktionseinheit auf den Bus 6 ausgegebenen Datenverkehr und entschlüsselt den empfangenen Datenverkehr.

Die Verschlüsselungseinheiten der Funktionseinheiten 1, 2 und 3 sind identisch ausgeführt. Beispielsweise die der CPU 1 zugeordnete Verschlüsselungseinheit 12 umfaßt ein Schlüsselregister 10, in dem ein Schlüsselwort gespeichert ist. Ein Exklusiv-ODER-Gatter 11 ist in den Datenpfad zwischen CPU 1 und Bus 6 geschaltet. Außerdem wird dem Gatter 11 auch der Schlüssel K1 aus dem Schlüsselregister 10 zugeführt. Durch Verknüpfung des vom Bus 6 empfangenen Datenwerts mit dem Schlüsselwort K1 wird das vom Bus 6 verschlüsselt empfangene Datum T1 in Klartext T umgewandelt. Die Leitung vom Exklusiv-ODER-Gatter zur CPU 1 ist im allgemeinen nicht ohne weiteres abhörbar, da die CPU 1 eine unregelmäßige Struktur aufweist. Wenn die CPU 1 einen Datenwert T auf den Bus 6 ausgibt, wird dieser Klartextdatenwert im Exklusiv-ODER-Gatter 11 mit einem vom Schlüsselregister 10 bereitgestellten Schlüssel verknüpft und als Datenwert T1 am Bus zur Verfügung gestellt. Eine weitere Einheit, beispielsweise eine Peripheriereinheit 3, empfängt das verschlüsselte Datum T1 und entschlüsselt es auf komplementäre Weise.

Der für die Verschlüsselung in der Einheit 12 verwendete Schlüssel K1 wird taktweise verändert. Der Schlüssel wird von einem Schlüsselgenerator 61 bereitgestellt, der das Schlüsselwort zufällig erzeugt. Mit jedem von einem Taktgenerator 62 bereitgestellten Takt ändert sich das Schlüsselwort K1. Wesentlich ist, daß ein Schlüssel K1, der zur Verschlüsselung eines vor der CPU 1 ausgegebenen Datenwerts verwendet wird, ebenfalls an den anderen Verschlüsselungseinheiten zum Entschlüsseln desselben Datenwerts bereitsteht. Hierzu sind alle den jeweiligen Funktionseinheiten zugeordneten Schlüsselregister an den Zufallsgenerator 61 und Taktgenerator 62 parallel angeschlossen. Dadurch wird beispielsweise ein von der CPU 1 abgegebener Datenwert T als Datenwert T1 verschlüsselt auf den Bus ausgegeben und mit dem gleichen Schlüssel K1 an der Peripherieeinheit 3 entschlüsselt und dort als gleiches Datum T im Klartext zur Verfügung gestellt. Durch die zufallsgesteuerte Aktualisierung des Schlüssels ist eine hohe Sicherheit vor einem Entschlüsselungsversuch des über den Bus übertragenen Datums erreicht.

Dem Cache-Speicher 5 ist eine den Verschlüsselungseinrichtungen 12 und 32 entsprechende Verschlüsselungseinrichtung 52 vorgeschaltet. Die Verschlüsselungseinrichtung 52 umfaßt ein Schlüsselregister 50, welches in gleicher Weise mit dem Taktgenerator 62 und dem Zufallsgenerator 61 verbunden ist sowie ein Exklusiv-ODER-Gatter 51, welches in den Datenpfads zwischen Bus 6 und Cache-Speicher 5 geschaltet ist. Ohne weitere Maßnahmen würde der zwischen Gatter 51 und Cache-Speicher 5 laufende Datenverkehr im Klartext vorliegen, außerdem wären die Daten im Cache-Speicher 5 im Klartext gespeichert.

Um die im Cache-Speicher 5 abgelegten Daten zusätzlich zu verschlüsseln ist eine weitere Verschlüsselungseinheit 53 vorgesehen, die mit der Verschlüsselungseinheit 52 kombiniert ist, um die von der Verschlüsselungseinrichtung 52 mittels des Schlüssels K1 entschlüsselten Daten wieder zu verschlüsseln. Die weitere Verschlüsselungseinrichtung 53 umfaßt ein Schlüsselregister 54 sowie ein Exklusiv-ODER-Gatter 55. Das Exklusiv-ODER-Gatter 55 ist zwischen das Schlüsselregister 50 und das Exklusiv-ODER-Gatter 51 geschaltet. Durch das Exklusiv-ODER-Gatter 55 werden die Schlüssel der Register 50 und 54 miteinander verknüpft. Dies bewirkt, daß der vom Exklusiv-ODER-Gatter 51 an den Cache-Speicher 5 abgegebene Datenstrom T2 verschlüsselt ist.

In entsprechender Weise werden die aus dem Cache-Speicher 5 ausgelesenen Daten T2 wieder mit dem im Schlüsselregister 54 abgelegten Schlüsselwort K2 entschlüsselt und mit dem im Schlüsselregister 50 abgelegten aktuellen veränderbaren Schlüssel K1 zur Ausgabe auf den Datenbus 6 verschlüsselt.

Solange im Cache-Speicher 5 gültige Daten gespeichert sind, die zur weiteren Verarbeitung wieder an den Bus auszulesen sind, muß das vom Schlüsselregister 54 bereitgestellte Schlüsselwort K2 unverändert gleich bleiben. Das Schlüsselwort K2 wird von einem weiteren Schlüsselgenerator 63 erzeugt. Zweckmäßigerweise wird der Schlüssel K2 geändert, wenn sich im Cache-Speicher 5 keine gültigen Daten mehr befinden. Die Aktualisierung des Schlüssels erfolgt wiederum nach einem Zufallsmuster, so daß ausreichend Sicherheit vor einer Dechiffrierung der im Speicher gespeicherten und über den Busabschnitt zwischen Gatter 51 und Speicher 5 übertragenen Daten gewährleistet ist.

Es empfehlt sich, den Schlüssel K2 dann zu ändern, wenn der Cache-Speicher 5 nach einem Cache-Flush entleert wird. Eine solche Operation wird beispielsweise bei einem Wechsel der von der Mikroprozessoranordnung abgearbeiteten Anwendung durchgeführt. Bei einem Cache-Flush werden sämtliche Datenwerte des Cache-Speichers auf einen vorgegebenen Wert zurückgesetzt. Prinzipiell ist es auch möglich, auf ein Rücksetzen des Speicherinhalts zu verzichten, da bei einer Schlüsseländerung ohnehin der Speicherinhalt nicht mehr entschlüsselbar ist.

Durch die Erfindung wird erreicht, daß sämtlicher über den Bus 6 laufender Datenverkehr und außerdem die im Pufferspeicher zwischengespeicherten Daten stets verschlüsselt sind und nicht im Klartext vorliegen. Durch die Verwendung von Exklusiv-ODER-Gattern können symmetrische Ver- und Entschlüsselungsverfahren verwendet werden, die geringen Schaltungs- und Rechenaufwand erfordern. Die Schlüsselbreite orientiert sich an der Anzahl der Leitungen des Busses. Es können alle Leitungen oder nur ein Teil der Leitungen verschlüsselt werden. Das Schlüsselregister ist dann entsprechend kleiner. Für jede Leitung wird ein Bit eines Schlüsselwortes verwendet. Bei Busleitungen können sowohl die Datenleitungen als auch die Status- und Steuerleitungen des Busses verschlüsselt weden. Prinzipiell ist es auch möglich, einzelne sicherheitsrelevante Signalleitungen in Mikroprozessoranordnungen oder sonstigen Schaltungen unter entsprechender Anwendung der oben beschriebenen Maßnahmen zu verschlüsseln. Als Zufallsquelle für die Schlüsselgeneratoren 61 und 63 eignet sich insbesondere eine physikalische Quelle. Bei weniger Sicherheitsbedürfnis kann der Schlüssel auch durch einen Pseudo-Zufallsgenerator erzeugt werden. Die Schlüsselgeneratoren können als linear rückgekoppelte Schieberegister (LFSR) realisiert werden. Die Aktualisierung des Schlüssels kann bei jedem Taktzyklus des Buses 6 durch den Taktgenerator 62 aktualisiert werden oder erst nach einem Ablauf einer bestimmten Anzahl von Taktzyklen. Durch geeignete Wahl der Parameter wird ein gewünschtes Maß an Sicherheit eingestellt.

## Patentansprüche

1. Mikroprozessoranordnung, die umfaßt:
- eine zentrale Verarbeitungseinheit (1),
- eine weitere Einheit (2, 3, 4),
- eine Speichereinheit (5),
- einen Bus (6), über den die zentrale Verarbeitungseinheit (1), die weitere Einheit (2, 3, 4) und der Speicher (5) miteinander zum Austausch von Daten verbunden sind,
- je eine den Einheiten (1, 2, 3, 4, 5) zugeordnete erste Verschlüsselungseinheit (12, 32, 52), die zwischen den Bus (6) und der zugeordneten Einheit (1, 2, 3, 4, 5) geschaltet ist und ein Mittel (10, 50) zur Bereitstellung eines Schlüssels und ein logisches Verknüpfungselement (11, 51) umfaßt, das zwischen den Bus (6) und die zugeordnete Einheit (1, 2, 3, 5) geschaltet ist, wobei der Schlüssel für die Einheiten gleich ist und veränderbar ist, **gekennzeichnet durch**
- eine der Speichereinheit (5) zugeordnete zweite Verschlüsselungseinheit (53), die ein Mittel (54) zur Bereitstellung eines weiteren Schlüssels umfaßt sowie ein logisches Verknüpfungselement (55), das zwischen das Mittel (54) zur Bereitstellung des Schlüssels der zugeordneten ersten Verschlüsselungseinheit (50) und das logische Verknüpfungselement (51) der zugeordneten ersten Verschlüsselungseinheit (52) geschaltet ist.

2. Mikroprozessoranordnung nach Anspruch 1,
**dadurch gekennzeichnet, daß**
ein Generator (61) für einen Schlüssel vorgesehen ist und daß die Mittel (10, 50) zur Bereitstellung des Schlüssels der ersten Verschlüsselungseinheiten (12, 32, 52) je ein Register (10, 50) umfassen, das ausgangsseitig mit dem jeweiligen logischen Verknüpfungselement (11, 51) verbunden ist und eingangsseitig mit dem Generator (61) für den Schlüssel.

3. Mikroprozessoranordnung nach Anspruch 1 oder 2,
**dadurch gekennzeichnet, daß**
der Generator (61) ein Zufallsgenerator ist, durch den Binärzahlen zufallsweise erzeugbar sind.

4. Mikroprozessoranordnung nach Anspruch 2,
**dadurch gekennzeichnet, daß**
die Register (10, 50) von einem gemeinsamen Taktgenerator (62) steuerbar sind.

5. Mikroprozessoranordnung nach einem der Ansprüche 2 oder 4
**dadurch gekennzeichnet, daß**
die Mittel (54) zur Bereitstellung des zweiten Schlüssels der zweiten Verschlüsselungseinheit (53) ein Register (54) umfassen, das eingangsseitig mit einem zweiten Generator (63) für einen Schlüssel verbunden ist, und daß das logische Verknüpfungselement (55) der der zweiten Verknüpfungseinheit (53) eingangsseitig mit dem Ausgang des Registers (54) der zweiten Verschlüsselungseinheit und dem Register (50) der zugeordneten ersten Verschlüsselungseinheit (52) verbunden ist und ausgangsseitig mit einem Eingang der logischen Verknüpfungseinheit (51) der zugeordneten ersten Verknüpfungseinheit (52).

6. Mikroprozessoranordnung nach einem der Ansprüche 1 bis 5,
**dadurch gekennzeichnet, daß**
die logischen Verknüpfungseinheiten (11, 51, 55) Exklusiv-ODER-Gatter sind.

7. Mikroprozessoranordnung nach einem der Ansprüche 1 bis 6,
**dadurch gekennzeichnet, daß**
die Speichereinheit (5) als ein flüchtiger Speicher ausgebildet ist.

8. Mikroprozessoranordnung nach Anspruch 5,
**dadurch gekennzeichnet, daß**
der zweite Generator (63) für einen Schlüssel derart steuerbar ist, daß durch ihn ein neuer Schlüssel erzeugbar ist, wenn die Speichereinheit (5) keinen gültigen Speicherinhalt aufweist.

9. Mikroprozessoranordnung nach Anspruch 8,
**dadurch gekennzeichnet, daß**
durch den zweiten Generator (63) der Schlüssel erzeugbar ist, nachdem die Speichereinheit (5) initialisiert worden ist.

10. Mikroprozessoranordnung nach einem der Ansprüche 1 bis 9,
**dadurch gekennzeichnet, daß**
ein weiterer Speicher (2) vorgesehen ist und daß die Speichereinheit (5) ein Cache-Speicher ist, in dem Daten des weiteren Speichers (2) zwischenspeicherbar sind.

## Claims

1. Microprocessor arrangement which comprises:
- a central processing unit (1),
- a further unit (2, 3, 4),
- a memory unit (5),
- a bus (6) which connects the central processing unit (1), the further unit (2, 3, 4) and the memory (5) to one another for the purpose of interchanging data,
- a respective first encryption unit (12, 32, 52), associated with the units (1, 2, 3, 4, 5), which is connected between the bus (6) and the associated unit (1, 2, 3, 4, 5) and comprises a means (10, 50) for providing a key and a combinational logic element (11, 51) which is connected between the bus (6) and the associated unit (1, 2, 3, 5), the key being the same for the units and being alterable, **characterized by**
- a second encryption unit (53) which is associated with the memory unit (5) and comprises a means (54) for providing a further key, and also a combinational logic element (55) which is connected between the means (54) for providing the key for the associated first encryption unit (50) and the combinational logic element (51) for the associated first encryption unit (52).

2. Microprocessor arrangement according to Claim 1,
**characterized in that**
a generator (61) for a key is provided, and **in that** the means (10, 50) for providing the key for the first encryption units (12, 32, 52) comprise a respective register (10, 50) whose output is connected to the respective combinational logic element (11, 51) and whose input side is connected to the generator (61) for the key.

3. Microprocessor arrangement according to Claim 1 or 2,
**characterized in that**
the generator (61) is a random number generator which can generate binary numbers randomly.

4. Microprocessor arrangement according to Claim 2,
**characterized in that**
the registers (10, 50) can be controlled by a common clock generator (62).

5. Microprocessor arrangement according to one of Claims 2 or 4,
**characterized in that**
the means (54) for providing the second key for the second encryption unit (53) comprise a register (54) whose input is connected to a second generator (63) for a key, and **in that** the combinational logic element (55) for the for the [sic] second combinational logic [sic] unit (53) is connected by its inputs to the output of the register (54) for the second encryption unit and to the register (50) for the associated first encryption unit (52), and by its output to an input of the combinational logic unit (51) for the associated first combinational logic [sic] unit (52).

6. Microprocessor arrangement according to one of Claims 1 to 5,
**characterized in that**
the combinational logic units (11, 51, 55) are Exclusive-OR-gates.

7. Microprocessor arrangement according to one of Claims 1 to 6,
**characterized in that**
the memory unit (5) is in the form of a volatile memory.

8. Microprocessor arrangement according to Claim 5,
**characterized in that**
the second generator (63) for a key can be controlled such that it can generate a new key if the memory unit (5) has no valid memory content.

9. Microprocessor arrangement according to Claim 8,
**characterized in that**
the second generator (63) can generate the key after the memory unit (5) has been initialized.

10. Microprocessor arrangement according to one of Claims 1 to 9,
**characterized in that**
a further memory (2) is provided, and **in that** the memory unit (5) is a cache which can buffer data for the further memory (2).

## Revendications

1. Circuit à microprocesseur, qui comprend :
- une unité de traitement centrale (1),
- une autre unité (2, 3, 4),
- une unité de mémoire (5),
- un bus (6) par lequel l'unité de traitement centrale (1), l'autre unité (2, 3, 4) et la mémoire (5) sont reliées ensemble pour échanger des données,
- à chaque fois une première unité de cryptage (12, 32, 52) qui est associée aux unités (1, 2, 3, 4, 5), qui est branchée entre le bus (6) et l'unité associée (1, 2, 3, 4, 5) et qui comprend un moyen (10, 50) pour la mise à disposition d'une clé et un élément de combinaison logique (11, 51) qui est branché entre le bus (6) et l'unité associée (1, 2, 3, 5), la clé pour les unités étant identique et modifiable, **caractérisé par**
- une deuxième unité de cryptage (53) qui est associée à l'unité de mémoire (5) et qui comprend un moyen (54) pour la mise à disposition d'une autre clé ainsi qu'un élément de combinaison logique (55) qui est branché entre le moyen (50) pour la mise à disposition de la clé de la première unité de cryptage associée (50) et l'élément de combinaison logique (52) de la première unité de cryptage associée (52).

2. Circuit à microprocesseur, **caractérisé par le fait qu'**il est prévu un générateur (61) pour une clé et que les moyens (10, 50) pour la mise à disposition de la clé des premières unités de cryptage (12, 32, 52) comprennent chacun un registre (10, 50) qui est relié en sortie à l'élément de combinaison logique respectif (11, 51) et en entrée au générateur (61) pour la clé.

3. Circuit à microprocesseur selon la revendication 1 ou 2, **caractérisé par le fait que** le générateur (61) est un générateur aléatoire par lequel des nombres binaires peuvent être produits de façon aléatoire.

4. Circuit à microprocesseur selon la revendication 2, **caractérisé par le fait que** les registres (10, 50) peuvent être commandés par un générateur d'horloge (62) commun.

5. Circuit à microprocesseur selon l'une des revendications 2 ou 4, **caractérisé par le fait que** les moyens (54) pour la mise à disposition de la deuxième clé de la deuxième unité de cryptage (53) comprennent un registre (54) qui est relié en entrée à un deuxième générateur (63) pour une clé et que l'élément de combinaison logique (55) de la deuxième unité de cryptage (53) est relié en entrée à la sortie du registre (54) de la deuxième unité de cryptage et au registre (50) de la première unité de cryptage associée (52) et en sortie à une entrée de l'élément de combinaison logique (51) de la première unité de cryptage associée (52).

6. Circuit à microprocesseur selon l'une des revendications 1 à 5, **caractérisé par le fait que** les éléments de combinaison logique (11, 51, 55) sont des portes OU-EXCLUSIF.

7. Circuit à microprocesseur selon l'une des revendications 1 à 6, **caractérisé par le fait que** l'unité de mémoire (5) est conçue comme une mémoire volatile.

8. Circuit à microprocesseur selon la revendication 5, **caractérisé par le fait que** le deuxième générateur (63) pour une clé peut être commandé de telle sorte qu'il peut produire une nouvelle clé lorsque l'unité de mémoire (5) n'a pas de contenu de mémoire valide.

9. Circuit à microprocesseur selon la revendication 8, **caractérisé par le fait que** le deuxième générateur (63) peut produire la clé après que l'unité de mémoire (5) a été initialisée.

10. Circuit à microprocesseur selon l'une des revendications 1 à 9, **caractérisé par le fait qu'**il est prévu une autre mémoire (2) et que l'unité de mémoire (5) est une mémoire cache dans laquelle sont mémorisées temporairement des données de l'autre mémoire (2).
